# EUROPÄISCHE PATENTANMELDUNG

(11) **EP 4 018 889 A1**
(43) Veröffentlichungstag der Anmeldung: **29.06.2022**
(21) Anmeldenummer: 21211269.2
(22) Anmeldetag: 30.11.2021
(51) Int. Cl.: A47J 31/60, A47J 31/40

(54) **GERÄT ZUM ZUBEREITEN VON GETRÄNKEN**

(30) Priorität: 14.12.2020 DE 102020215847
(71) Anmelder: BSH Hausgeräte GmbH, 81739 München (DE)
(72) Erfinder: Einsiedler, Thomas, 83278 Traunstein (DE); Höglauer, Michael, 83246 Unterwössen (DE); Mies, Maximilian, 83253 Rimsting (DE); Quittek, Benno, 83278 Traunstein (DE); Steffl, Michael, 83250 Marquartstein (DE)

(57) **Zusammenfassung**

Die Erfindung betrifft ein Gerät (1) zum Zubereiten von Getränken, mit wenigstens einem Behältnis (2) zum Bevorraten eines Inhalts (3), mit einer an einer Basiseinheit (4) des Geräts (1) vorhandenen Ausnehmung (5), in welche das Behältnis (2) bei seiner Montage entlang einer Andockrichtung (A) einschiebbar und in einem montierten Zustand (6) eingeschoben ist, wobei das Behältnis (2) in seinem montierten Zustand (6) fluidisch mit der Basiseinheit (4) verbunden ist, sodass die Basiseinheit (4) mit dem Inhalt (3) des Behältnisses (2) versorgbar ist, wobei das Behältnis (2) einen Träger (7) und eine austauschbare Kartusche (8) mit dem Inhalt (3) umfasst, wobei am Träger (7) und an der Kartusche (8) je ein Formschlusselement (9) vorhanden ist, wobei die Formschlusselemente (9) komplementär zueinander ausgebildet sind, wobei bei der Montage des Behältnisses (2) an der Basiseinheit (4) mittels der Formschlusselemente (9) ein Formschluss (10) ausgebildet wird, der im montierten Zustand (6) des Behältnisses (2) die Kartusche (8) am Träger (7) hält.

## Beschreibung

Die Erfindung betrifft in zwei Erfindungsaspekten je ein Gerät zum Zubereiten von Getränken.

Geräte zum Zubereiten von Getränken werden seit geraumer Zeit mit austauschbaren Vorratsbehältnissen zur Lagerung eines Pflegemittels, Reinigungsmittels oder Entkalkungsmittels ausgestattet. Dabei werden solche Behältnisse üblicherweise fluiddicht mit einer Basiseinheit des Geräts lösbar verbunden. Sobald also der Inhalt eines solchen Behältnisses aufgebraucht ist, kann das leere Behältnis durch ein neues, volles Behältnis ersetzt werden.

Als nachteilig bei solchen herkömmlichen Geräten erweist es sich jedoch, dass es schon bei geringfügigem Austritt und damit einhergehenden Rückständen des Inhalts des Behältnisses in einem Anschlussbereich zwischen Behältnis und Basiseinheit zu einem unerwünschten Verkleben des Behältnisses mit der Basiseinheit durch den ausgetretenen Inhalt kommen kann. Ein derartiges Verkleben erschwert die Demontage des leeren Behältnisses und die Montage des neuen, vollen Behältnisses.

Es ist daher eine Aufgabe der vorliegenden Erfindung, insbesondere im Hinblick auf die voranstehend aufgezeigten Nachteile, für die Entwicklung von Geräten zum Zubereiten von Getränken neue Wege aufzuzeigen.

Diese Aufgabe wird durch die Gegenstände der unabhängigen Patentansprüche gelöst. Bevorzugte Ausführungsformen sind Gegenstand der abhängigen Patentansprüche.

Grundidee beider Aspekte der Erfindung ist demnach ein Gerät zum Zubereiten von Getränken mit einem austauschbaren Behältnis zum Bevorraten eines Inhalts, insbesondere eines Pflege- oder Reinigung- oder Entkalkungsmittels, auszustatten, wobei das Behältnis in seinem montierten Zustand mittels eines Formschlusses befestigt ist, der bei der Montage des Behältnisses an einer Basiseinheit des Geräts ausgebildet wird. Dabei hält der Formschluss gemäß dem ersten Erfindungsaspekt eine Kartusche des Behältnisses an einem Träger des Behältnisses und gemäß dem zweiten Aspekt der Erfindung das Behältnis an der Basiseinheit.

Dies bietet den Vorteil, dass das geleerte Behältnis selbst in dem Fall, in welchem es in Folge von Rückständen seines Inhalts mit der Basiseinheit verklebt ist, zuverlässig aus der Basiseinheit entfernt werden kann. Ferner kann das gefüllte Behältnis in seinem montierten Zustand mittels des Formschlusses besonders zuverlässig an der Basiseinheit gehalten werden.

Ein Gerät gemäß dem ersten Aspekt der Erfindung dient zum Zubereiten von Getränken. Das Gerät umfasst wenigstens ein Behältnis zum Bevorraten eines Inhalts, insbesondere eines Pflege- oder Reinigungs- oder Entkalkungsmittels. Das Gerät umfasst außerdem eine an einer Basiseinheit des Geräts vorhandene Ausnehmung, in welche das Behältnis bei seiner Montage entlang einer Andockrichtung einschiebbar und in einem montierten Zustand eingeschoben ist. Dabei ist das Behältnis in seinem montierten Zustand fluidisch mit der Basiseinheit verbunden, sodass die Basiseinheit mit dem Inhalt des Behältnisses versorgbar ist. Das Behältnis umfasst einen Träger und eine austauschbare Kartusche mit dem Inhalt. Am Träger und an der Kartusche ist je ein (erstes) Formschlusselement vorhanden, wobei die (ersten) Formschlusselemente komplementär zueinander ausgebildet sind. Dabei wird bei der Montage des Behältnisses an der Basiseinheit mittels der (ersten) Formschlusselemente ein (erster) Formschluss ausgebildet, der im montierten Zustand des Behältnisses die Kartusche am Träger, insbesondere entgegen der Andockrichtung, hält. Es versteht sich, dass auch zwei oder mehrere derartige Behältnisse vorhanden sein können. Vorteilhaft kann so infolge des (ersten) Formschlusses das Behältnis mit seinem Träger und mit seiner Kartusche - für den Fall eines anstehenden Austauschs der Kartusche - selbst dann zuverlässig von der Basiseinheit getrennt werden, wenn die auszutauschende Kartusche infolge von Rückständen ihres Inhalts mit der Basiseinheit verklebt ist.

Gemäß einer bevorzugten Weiterbildung des Geräts nach dem ersten Erfindungsaspekt ist das (erste) Formschlusselement des Trägers ein Schnapphaken, der bezüglich der Andockrichtung eine erste Hinterschneidung aufweist. Das (erste) Formschlusselement der Kartusche weist eine zur ersten Hinterschneidung des Schnapphakens komplementäre zweite Hinterschneidung auf. An der Ausnehmung der Basiseinheit ist ein in einen von der Ausnehmung begrenzten Ausnehmungsinnenraum ragender Vorsprung der Basiseinheit vorhanden. Dabei wird bei der Montage des Behältnisses an der Basiseinheit der Schnapphaken des Trägers mittels des Vorsprungs der Basiseinheit zur Erzeugung des (ersten) Formschlusses betätigt, insbesondere deformiert, sodass im montierten Zustand die erste und die zweite Hinterschneidung formschlüssig miteinander in Eingriff stehen. Dies erlaubt eine besonders wirksame Ausbildung des (ersten) Formschlusses

Gemäß einer bevorzugten Weiterbildung des Geräts nach dem ersten Aspekt der Erfindung ist der Träger mitsamt Kartusche schubladenartig in die Ausnehmung der Basiseinheit einschiebbar bzw. eingeschoben. Ein derart realisiertes Behältnis kann besonders einfach montiert bzw. demontiert werden.

Die Erfindung betrifft außerdem in einem zweiten Erfindungsaspekt ein Gerät zum Zubereiten von Getränken, wobei der zweite Erfindungsaspekt vorzugsweise auch bei einem Gerät nach dem ersten Erfindungsaspekt verwirklicht ist. Das Gerät gemäß dem zweiten Erfindungsaspekt umfasst wenigstens ein Behältnis zum Bevorraten eines Inhalts, insbesondere eines Pflege- oder Reinigungs- oder Entkalkungsmittels. Darüber hinaus umfasst das Gerät eine an einer Basiseinheit des Geräts vorhandene Ausnehmung, in welche das Behältnis bei seiner Montage entlang einer Andockrichtung einschiebbar und in einem montierten Zustand eingeschoben ist. Dabei ist das Behältnis in seinem montierten Zustand fluidisch mit der Basiseinheit verbunden, sodass die Basiseinheit mit dem Inhalt des Behältnisses versorgbar ist. An einer entlang der Andockrichtung verlaufenden Wand der Ausnehmung und am Behältnis ist je wenigstens ein (zweites) Formschlusselement vorhanden, wobei die (zweiten) Formschlusselemente von Wand und Behältnis komplementär zueinander ausgebildet sind. Bei der Montage des Behältnisses an der Basiseinheit wird mittels der (zweiten) Formschlusselemente ein (zweiter) Formschluss ausgebildet, der das Behältnis in seinem montierten Zustand an der Basiseinheit hält. Es versteht sich, dass auch zwei oder mehrere derartige Behältnisse vorhanden sein können. Vorteilhaft kann mittels des (zweiten) Formschlusses das Behältnis in seinem montierten Zustand besonders gut an der Basiseinheit gehalten werden, sodass auch bei großen Druckdifferenzen zwischen Basiseinheit und Behältnis eine unplanmäßigen Trennung der fluidischen Verbindung zwischen Behältnis und Basiseinheit zumindest weitgehend vermieden werden kann.

Bei einer vorteilhaften Weiterbildung des Geräts gemäß dem zweiten Aspekt der Erfindung ist das (zweite) Formschlusselement des Behältnisses an einem bezüglich einer Schwerkraftrichtung unten angeordneten Behältnisboden des Behältnisses außenseitig vorhanden. Das (zweite) Formschlusselement der Basiseinheit ist an einem bezüglich der Schwerkraftrichtung unten angeordneten Ausnehmungsboden innenseitig angeordnet. Die Schwerkraftrichtung bezieht sich bevorzugt auf eine Betriebslage des Geräts. Dabei sind die (zweiten) Formschlusselemente bei der Montage des Behältnisses an der Basiseinheit zur Erzeugung des (zweiten) Formschlusses durch die auf das Behältnis wirkende Schwerkraft miteinander in Eingriff bringbar. Ein solcher (zweiter) Formschluss lässt sich besonders einfach und infolge der Ausnutzung der Schwerkraft mit besonders geringem Kraftaufwand erzeugen.

Gemäß einer bevorzugten Weiterbildung des Geräts nach beiden Erfindungsaspekten ist bzw. wird der (erste oder/ und zweite) Formschluss erst ausgebildet, wenn sich das Behältnis in seinem montierten Zustand befindet. Dabei ist kein (erster oder/ und zweiter) Formschluss mittels der (ersten oder/ und zweiten) Formschlusselemente ausgebildet, wenn sich das Behältnis nicht in seinem montierten Zustand befindet. Vorteilhaft kann also, sobald der erste bzw. zweite Formschluss aufgelöst ist, das Behältnis bzw. die Kartusche mit besonders geringem Kraftaufwand aus der Aufnahme gezogen bzw. vom Träger getrennt werden.

Bei einer vorteilhaften Weiterbildung des Geräts gemäß beiden Aspekten der Erfindung umfasst das Behältnis einen ersten Anschluss, der vom Inhalt des Behältnisses durchströmbar ist. Die Basiseinheit weist an einer quer zur Andockrichtung verlaufenden Stirnwand der Ausnehmung einen zweiten Anschluss auf, der komplementär zum ersten Anschluss ausgebildet und ebenfalls vom Inhalt des Behältnisses durchströmbar ist. Dabei ist die fluidische Verbindung des Behältnisses und der Basiseinheit im montierten Zustand des Behältnisses mittels des ersten und des zweiten Anschlusses entlang der Andockrichtung ausgebildet. So kann das Einschieben bzw. Herausziehen des Behältnisses aus der Aufnahme entlang der Andockrichtung zugleich dazu genutzt werden, die fluidische Verbindung zu erzeugen.

Bei einer bevorzugten Weiterbildung des Geräts gemäß beiden Erfindungsaspekten ist vorgesehen, dass der erste Anschluss einen entlang der Andockrichtung abstehenden Anschlussstutzen und der zweite Anschluss eine entlang der Andockrichtung ausgenommene Stutzenaufnahme umfasst oder umgekehrt. Solche Anschlüsse erlauben eine besonders fluiddichte fluidische Verbindung.

Bei einer vorteilhaften Weiterbildung des Geräts nach beiden Aspekten der Erfindung umfasst das Behältnis eine Abdeckung, die im montierten Zustand des Behältnisses die Ausnehmung der Basiseinheit gegenüber einer äußeren Umgebung des Geräts verschließt. Eine derartige Abdeckung verhindert in vorteilhafter Weise zumindest weitgehend ein Eindringen von Fremdkörpern wie Schmutz oder Ähnlichem in die Ausnehmung.

Gemäß einer weiteren bevorzugten Weiterbildung des Geräts nach beiden Erfindungsaspekten weisen die Abdeckung und die Basiseinheit je wenigstens ein Zentrierelement auf, wobei die Zentrierelemente von Abdeckung und Basiseinheit komplementär zueinander ausgebildet sind. Dabei werden die Zentrierelemente bei der Montage des Behältnisses an der Basiseinheit derart miteinander in Eingriff gebracht, dass die Zentrierelemente das Behältnis quer zur Andockrichtung an der Basiseinheit halten. Damit lässt sich vorteilhaft eine Biegebeanspruchung der fluidischen Verbindung zwischen Behältnis und Basiseinheit vermeiden, infolge welcher anderenfalls eine erhöhte Leckage-Gefahr bestünde.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: beispielhaft ein Behältnis zum Bevorraten eines Inhalts für ein Gerät gemäß dem ersten Aspekt der Erfindung in einer perspektivischen Darstellung,
- Fig. 2: ein Beispiel eines Geräts gemäß dem ersten Aspekt der Erfindung mit dem Behältnis der Figur 1 in einer perspektivischen Teildarstellung,
- Fig. 3: ein Beispiel eines Geräts gemäß dem zweiten Aspekt der Erfindung in einem Teilschnitt entlang einer Andock- und einer Schwerkraftrichtung,
- Fig. 4a, 4b: je eine Variante des Beispiels der Figur 3 in einem Teilschnitt entlang der Andock- und der Schwerkraftrichtung.

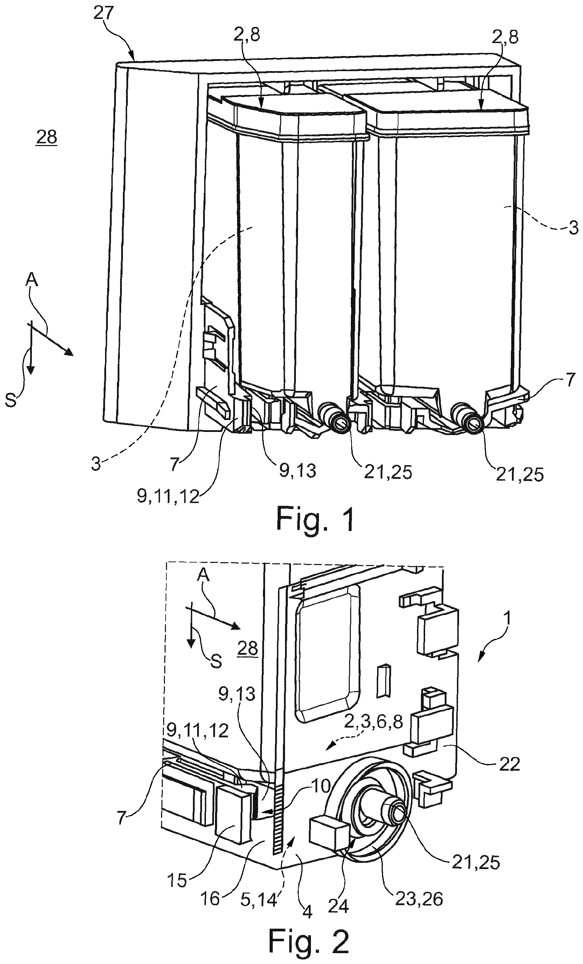

In der Figur 1 ist in einer perspektivischen Darstellung beispielhaft ein Behältnis 2 für ein in der Figur 2 perspektivisch teildargestelltes Gerät 1 gemäß einem ersten Aspekt der Erfindung gezeigt. Dieses Gerät 1 dient zum Zubereiten von Getränken. Ein solches Getränk kann beispielsweise ein Kaffeegetränk oder ein Teegetränk sein. Das Gerät 1 umfasst ein Behältnis 2. Das Behältnis 2 dient zum Bevorraten eines Inhalts 3. Der Inhalt 3 des Behältnisses 2 kann beispielsweise ein Pflegemittel, ein Reinigungsmittel oder ein Entkalkungsmittel für eine Behandlung des Geräts 1 mit dem Inhalt 3 sein.

Gemäß Figur 2 umfasst das Gerät 1 außerdem eine Basiseinheit 4, an welcher eine Ausnehmung 5 vorhanden ist. In der Figur 2 ist die Ausnehmung 5 verdeckt. In die Ausnehmung 5 kann das Behältnis 2 bei seiner Montage entlang einer Andockrichtung A eingeschoben werden. Im Beispiel der Figur 2 befindet sich das Behältnis 2 in seinem zusammengebauten Zustand 6, in welchem das Behältnis 2 entlang der Andockrichtung A in die Ausnehmung 5 der Basiseinheit 4 eingeschoben ist. Das Behältnis 2 ist in seinem montierten Zustand 6 fluidisch mit der Basiseinheit 4 verbunden, sodass die Basiseinheit 4 mit dem Inhalt 3 des Behältnisses 2 versorgt werden kann. Das Behältnis 2 umfasst einen Träger 7 und eine austauschbare Kartusche 8, in welcher der Inhalt 3 bevorratet ist. Dabei ist am Träger 7 und an der Kartusche 8 jeweils ein erstes Formschlusselement 9 vorhanden. Diese ersten Formschlusselemente 9 sind komplementär zueinander ausgebildet. Bei der Montage des Behältnisses 2 an der Basiseinheit 4 wird mittels der ersten Formschlusselemente 9 ein erster Formschluss 10 ausgebildet. Im in der Figur 2 gezeigten montierten Zustand 6 des Behältnisses 2 hält der erste Formschluss 10 die Kartusche 8 am Träger 7. Beispielsweise ist die Kartusche 8 am Träger 7 mittels des ersten Formschlusses 10 entgegen der Andockrichtung A gehalten. Wenn der Träger 7 also zur Demontage entgegen der Andockrichtung A aus der Ausnehmung 5 gezogen wird, wird zusammen mit dem Träger 7 auch die Kartusche 8 aus der Ausnehmung 5 entfernt, da die Kartusche 8 zumindest zu Beginn der Demontage (ausgehend vom montierten Zustand 6) mittels des Formschlusses 10 an dem Träger 7 gehalten ist.

Den Figuren 1 und 2 ist ferner zu entnehmen, dass das erste Formschlusselement 9 des Trägers 7 ein Schnapphaken 11 ist, der bezüglich der Andockrichtung A eine erste Hinterschneidung 12 aufweist. Das erste Formschlusselement 9 der Kartusche 8 weist eine zur ersten Hinterschneidung 12 des Schnapphakens 11 komplementäre zweite Hinterschneidung 13 auf. Die zweite Hinterschneidung 13 der Kartusche 8 kann durch eine der Ausnehmung 5 zugewandte Rückseite der Kartusche 8 realisiert sein. Alternativ kann die Kartusche 8 auch eine Öffnung aufweisen, an welcher die zweite Hinterschneidung 13 vorhanden ist. Dabei ist gemäß Figur 2 an der Ausnehmung 5 der Basiseinheit 4 ein Vorsprung 15 der Basiseinheit 4 vorhanden, der in einen von der Ausnehmung 5 begrenzten Ausnehmungsinnenraum 14 ragt. Dabei sind das Behältnis 2 bzw. sein Träger 7 und die Basiseinheit 4 bzw. ihr Vorsprung 15 so aufeinander abgestimmt, dass bei der Montage des Behältnisses 2 an der Basiseinheit 4 der Schnapphaken 11 des Trägers 7 mittels des Vorsprungs 15 der Basiseinheit 4 zur Erzeugung des ersten Formschlusses 10 betätigt wird. Beispielsweise wird der Schnapphaken 11 bei der Montage des Behältnisses 2, also beim Einschieben des Behältnisses 2 in die Ausnehmung 5 der Basiseinheit 4, deformiert. Dabei wird bei der Montage des Behältnisses 2 an der Basiseinheit 4 der Schnapphaken 11 derart betätigt, dass im montierten Zustand 6 die erste und die zweite Hinterschneidung 12, 13 formschlüssig miteinander in Eingriff stehen. Folglich ist der erste Formschluss 10 im montierten Zustand 6 mittels des Eingriffs der ersten und der zweiten Hinterschneidung 12, 13 erzeugt.

Dem Beispiel der Figuren 1 und 2 entsprechend ist der Träger 7 mitsamt der Kartusche 8 schubladenartig in die Ausnehmung 5 der Basiseinheit 4 einschiebbar bzw. im montierten Zustand 6 (siehe Figur 2) des Behältnisses 2 eingeschoben.

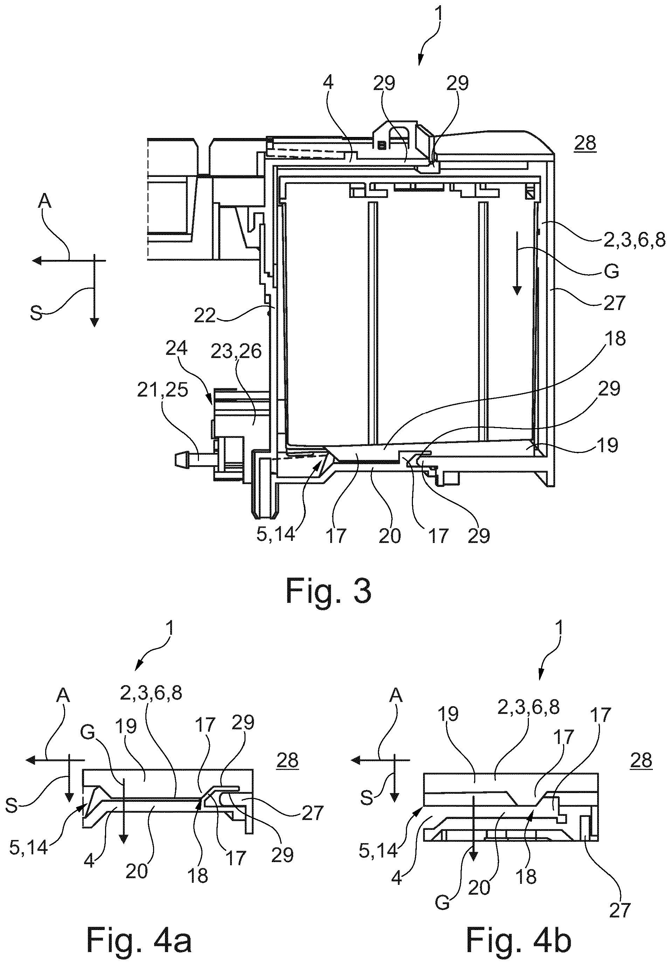

In der Figur 3 ist in einem entlang der Andockrichtung A und einer Schwerkraftrichtung S geführten Teilschnitt ein Beispiel eines Geräts 1 gemäß einem zweiten Aspekt der Erfindung gezeigt, welches zum Zubereiten von Getränken dient. Beide Erfindungsaspekte können auch in ein und demselben Gerät 1 verwirklicht sein, was in den Figuren aber nicht veranschaulicht ist. Die Schwerkraftrichtung S bezieht sich auf eine Betriebslage des Geräts 1.

Gemäß Figur 3 umfasst das Gerät 1 wenigstens ein Behältnis 2 zum Bevorraten eines Inhalts 3, welcher beispielsweise ein Pflegemittel, ein Reinigungsmittel oder ein Entkalkungsmittel ist. Das Gerät 1 des zweiten Erfindungsaspekts umfasst ferner eine Basiseinheit 4, an welcher eine Ausnehmung 5 vorhanden ist. In diese Ausnehmung 5 kann das Behältnis 2 bei seiner Montage entlang der Andockrichtung A eingeschoben werden bzw. ist in seinem montierten Zustand 6 eingeschoben. In der Figur 3 befindet sich das Behältnis 2 in seinem zusammengebauten Zustand 6. Im montierten Zustand 6 ist das Behältnis 2 fluidisch mit der Basiseinheit 4 verbunden, sodass die Basiseinheit 4 mit dem Inhalt 3 des Behältnisses 2 versorgbar ist. Dabei ist gemäß dem zweiten Erfindungsaspekt an einer entlang der Andockrichtung A verlaufenden Wand 16 der Ausnehmung 5 und am Behältnis 2 je wenigstens ein zweites Formschlusselement 17 vorhanden. Die zweiten Formschlusselemente 17 sind komplementär zueinander ausgebildet. Dabei wird bei der Montage des Behältnisses 2 an der Basiseinheit 4 mittels der zweiten Formschlusselemente 17 ein zweiter Formschluss 18 ausgebildet, der das Behältnis 2 in seinem montierten Zustand 6 an der Basiseinheit 4 hält.

Figur 3 lässt ferner erkennen, dass das zweite Formschlusselement 17 des Behältnisses 2 an einem bezüglich der Schwerkraftrichtung S unten angeordneten Behältnisboden 19 des Behältnisses 2 außenseitig angeordnet ist. Das zweite Formschlusselemente 17 der Basiseinheit 4 ist an einem bezüglich der Querrichtung S unten angeordneten Ausnehmungsboden 20 innenseitig, also dem Ausnehmungsinnenraum 14 zugewandt, angeordnet. Dabei sind die zweiten Formschlusselemente 17 zur Erzeugung des zweiten Formschlusses 18 bei der Montage des Behältnisses 2 an der Basiseinheit 4 durch die auf das Behältnis 2 wirkende Schwerkraft G miteinander in Eingriff bringbar und im montierten Zustand 6 gebracht. Mit anderen Worten rutscht das Behältnis 2 also in Schwerkraftrichtung S unter Erzeugung des zweiten Formschlusses 18 relativ zur Basiseinheit 4 nach unten, sobald zweite Formschlusselement 17 des Behältnisses 2 beim Einschieben des Behältnisses 2 in die Ausnehmung 5 der Basiseinheit 4 in Andockrichtung A das zweite Formschlusselement 17 des Behältnisses 2 überstrichen hat. Infolge dieses "Nach-unten-Rutschens" des Behältnisses 2 relativ zur Basiseinheit 4 werden die zweiten Formschlusselemente 17 bezüglich der Andockrichtung A in Eingriff gebracht, welcher Eingriff ein Trennen des im montierten Zustand 6 befindlichen Behältnisses 2 von der Basiseinheit 4 entgegen der Andockrichtung A behindert.

Die Figuren 4a und 4b zeigen jeweils eine von der Figur 3 verschiedene Variante des Geräts 1 gemäß dem zweiten Aspekt der Erfindung. Dabei unterscheiden sich die Varianten der Figuren 4a und 4b von dem Beispiel der Figur 3 in der Ausgestaltung des zweiten Formschlusselements 17. Demnach ist beim Beispiel der Figur 3 eine Eingriffsfläche der beiden zweiten Formschlusselemente 17 streng vertikal, also entlang der Schwerkraftrichtung S verlaufend, realisiert. Gemäß den Figuren 4a und 4b sind diese Eingriffsflächen der zweiten Formschlusselemente 17 gegenüber der Schwerkraftrichtung S angestellt, sodass das oben beschriebene Nach-unten-Rutschen des Behältnisses 1 relativ zur Basiseinheit 4 weniger abrupt verläuft. Außerdem begünstigt die Anstellung der Eingriffsflächen relativ zur Schwerkraftrichtung S die Demontage des Behältnisses 2 entgegen der Andockrichtung A. Dabei unterscheiden sich die zweiten Formschlusselemente 17 des Behältnisses 2 der Varianten der Figuren 4a und 4b bezüglich ihrer Länge entlang der Andockrichtung A.

Gemäß allen Figuren, also auch gemäß beiden Erfindungsaspekten, ist der erste bzw. zweite Formschluss 10, 18 beispielsweise erst dann ausgebildet, wenn sich das Behältnis 2 in seinem montierten Zustand 6 befindet. Solange sich das Behältnis 2 also nicht in seinem montierten Zustand 6 befindet, ist auch kein erster bzw. zweiter Formschluss 10, 18 mittels der ersten bzw. zweiten Formschlusselemente 9, 17 vorhanden. Das bedeutet, dass der erste bzw. zweite Formschluss 10, 18 nicht ausgebildet ist, solange sich das Behältnis 2 vollständig außerhalb der Ausnehmung 5 befindet (gezeigt in Figur 1) und auch nicht, solange das Behältnis 2 bei seiner Montage in die Ausnehmung 5 geschoben bzw. bei seiner Demontage aus der Ausnehmung 5 herausgezogen wird. Der erste bzw. zweite Formschluss 10, 18 ist also beispielsweise ausschließlich in einer vollständig eingeschobenen Position des Behältnisses 2 in der Ausnehmung 5, die dem montierten Zustand 6 des Behältnisses 2 entspricht, vorhanden.

Den Figuren 1 bis 3 ist ferner zu entnehmen, dass das Gerät 1 beider Erfindungsaspekte beispielsweise einen ersten Anschluss 21 umfasst, der vom Inhalt 3 des Behältnisses 2 durchströmbar ist. Die Basiseinheit 4 weist eine quer zur Andockrichtung A verlaufenden Stirnwand 22 ihrer Ausnehmung 5 auf, an welcher ein vom Inhalt 3 des Behältnisses 2 durchströmbarer zweiter Anschluss 23 der Basiseinheit 4 vorhanden ist. Dieser zweite Anschluss 23 der Basiseinheit 4 ist komplementär zum ersten Anschluss 21 des Behältnisses 2 ausgebildet. Im montierten Zustand 6 des Behältnisses 2 ist die fluidische Verbindung 24 des Behältnisses 2 und der Basiseinheit 4 mittels des ersten und des zweiten Anschlusses 21, 23 entlang der Andockrichtung A ausgebildet. Dabei umfasst der erste Anschluss 21 einen entlang der Andockrichtung A abstehenden Anschlussstutzen 25. Der zweite Anschluss 23 weist eine entlang der Andockrichtung A ausgenommene Stutzenaufnahme 26 auf. In umgekehrter und in den Figuren nicht dargestellter Weise kann alternativ auch der erste Anschluss 21 eine Stutzenaufnahme 26 und der zweite Anschluss 23 einen Anschlussstutzen 25 umfassen.

Nach den Figuren 1 und 3 weist das Behältnis 2 des Geräts 1 gemäß beiden Erfindungsaspekten beispielsweise eine Abdeckung 27 auf. Diese Abdeckung 27 verschließt im montierten Zustand 6 des Behältnisses 2 die Ausnehmung 5 der Basiseinheit 4 gegenüber einer äußeren Umgebung 28 des Geräts 1. Die Abdeckung 27 kann lösbar mit der Kartusche 8 verbunden sein. Die Abdeckung 27 kann integraler Bestandteil des Trägers 7 sein, sodass der Träger 7 die Abdeckung 27 materialeinheitlich umfasst.

Dabei lassen die Figuren 3 und 4a erkennen, dass die Abdeckung 27 und die Basiseinheit 4 je wenigstens ein Zentrierelement 29 aufweisen, wobei die Zentrierelemente 29 komplementär zueinander ausgebildet sind. Im Beispiel der Figuren 3 und 4a sind die beiden Zentrierelemente 29 je als Zapfen und auf diesen abgestimmte Aufnahmeöffnung realisiert. Die Zentrierelemente 29 werden bei der Montage des Behältnisses 2 an der Basiseinheit 4 miteinander in Eingriff gebracht, sodass die Zentrierelemente 29 das Behältnis 2 quer zur Andockrichtung A an der Basiseinheit 4 halten. Solche Zentrierelemente 29 können, wenngleich in den Figuren 3 und 4a nur für den zweiten Erfindungsaspekt gezeigt, auch bei dem Gerät 1 gemäß dem ersten Erfindungsaspekt umgesetzt sein.

### Bezugszeichenliste

- 1: Gerät
- 2: Behältnis
- 3: Inhalt
- 4: Basiseinheit
- 5: Ausnehmung
- 6: montierter Zustand
- 7: Träger
- 8: Kartusche
- 9: (erstes) Formschlusselement
- 10: (erster) Formschluss
- 11: Schnapphaken
- 12: erste Hinterschneidung
- 13: zweite Hinterschneidung
- 14: Ausnehmungsinnenraum
- 15: Vorsprung
- 16: Wand
- 17: (zweites) Formschlusselement
- 18: (zweiter) Formschluss
- 19: Behältnisboden
- 20: Ausnehmungsboden
- 21: erster Anschluss
- 22: Stirnwand
- 23: zweiter Anschluss
- 24: fluidische Verbindung
- 25: Anschlussstutzen
- 26: Stutzenaufnahme
- 27: Abdeckung
- 28: Umgebung
- 29: Zentrierelement
- A: Andockrichtung
- S: Schwerkraftrichtung
- G: Schwerkraft

## Patentansprüche

1. Gerät (1) zum Zubereiten von Getränken,
- mit wenigstens einem Behältnis (2) zum Bevorraten eines Inhalts (3), insbesondere eines Pflege- oder Reinigungs- oder Entkalkungsmittels,
- mit einer an einer Basiseinheit (4) des Geräts (1) vorhandenen Ausnehmung (5), in welche das Behältnis (2) bei seiner Montage entlang einer Andockrichtung (A) einschiebbar und in einem montierten Zustand (6) eingeschoben ist,
- wobei das Behältnis (2) in seinem montierten Zustand (6) fluidisch mit der Basiseinheit (4) verbunden ist, sodass die Basiseinheit (4) mit dem Inhalt (3) des Behältnisses (2) versorgbar ist,
- wobei das Behältnis (2) einen Träger (7) und eine austauschbare Kartusche (8) mit dem Inhalt (3) umfasst,
- wobei am Träger (7) und an der Kartusche (8) je ein (erstes) Formschlusselement (9) vorhanden ist, wobei die (ersten) Formschlusselemente (9) komplementär zueinander ausgebildet sind,
- wobei bei der Montage des Behältnisses (2) an der Basiseinheit (4) mittels der (ersten) Formschlusselemente (9) ein (erster) Formschluss (10) ausgebildet wird, der im montierten Zustand (6) des Behältnisses (2) die Kartusche (8) am Träger (7), insbesondere entgegen der Andockrichtung (A), hält.

2. Gerät (1) nach Anspruch 1,
**dadurch gekennzeichnet, dass**
- das (erste) Formschlusselement (9) des Trägers (7) ein Schnapphaken (11) ist, der bezüglich der Andockrichtung (A) eine erste Hinterschneidung (12) aufweist,
- das (erste) Formschlusselement (9) der Kartusche (8) eine zur ersten Hinterschneidung (12) des Schnapphakens (11) komplementäre zweite Hinterschneidung (13) aufweist,
- an der Ausnehmung (5) der Basiseinheit (4) ein in einen von der Ausnehmung (5) begrenzten Ausnehmungsinnenraum (14) ragender Vorsprung (15) der Basiseinheit (4) vorhanden ist,
- bei der Montage des Behältnisses (2) an der Basiseinheit (4) der Schnapphaken (11) des Trägers (7) mittels des Vorsprungs (15) der Basiseinheit (4) zur Erzeugung des (ersten) Formschlusses (10) betätigt, insbesondere deformiert, wird, sodass im montierten Zustand (6) die erste und die zweite Hinterschneidung (12, 13) formschlüssig miteinander in Eingriff stehen.

3. Gerät (1) nach Anspruch 1 oder 2,
**dadurch gekennzeichnet, dass**
der Träger (7) mitsamt Kartusche (8) schubladenartig in die Ausnehmung (5) der Basiseinheit (4) einschiebbar bzw. eingeschoben ist.

4. Gerät (1) zum Zubereiten von Getränken, insbesondere nach einem der Ansprüche 1 bis 3,
- mit wenigstens einem Behältnis (2) zum Bevorraten eines Inhalts (3), insbesondere eines Pflege- oder Reinigungs- oder Entkalkungsmittels,
- mit einer an einer Basiseinheit (4) des Geräts (1) vorhandenen Ausnehmung (5), in welche das Behältnis (2) bei seiner Montage entlang einer Andockrichtung (A) einschiebbar und in einem montierten Zustand (6) eingeschoben ist,
- wobei das Behältnis (2) in seinem montierten Zustand (6) fluidisch mit der Basiseinheit (4) verbunden ist, sodass die Basiseinheit (4) mit dem Inhalt (3) des Behältnisses (2) versorgbar ist,
- wobei an einer entlang der Andockrichtung (A) verlaufenden Wand (16) der Ausnehmung (5) und am Behältnis (2) je wenigstens ein (zweites) Formschlusselement (17) vorhanden ist, wobei die (zweiten) Formschlusselemente (17) komplementär zueinander ausgebildet sind,
- wobei bei der Montage des Behältnisses (2) an der Basiseinheit (4) mittels der (zweiten) Formschlusselemente (17) ein (zweiter) Formschluss (18) ausgebildet wird, der das Behältnis (2) in seinem montierten Zustand (6) an der Basiseinheit (4) hält.

5. Gerät (1) nach Anspruch 4,
**dadurch gekennzeichnet, dass**
- das (zweite) Formschlusselement (17) des Behältnisses (2) an einem bezüglich einer Schwerkraftrichtung (S) unten angeordneten Behältnisboden (19) des Behältnisses (2) außenseitig vorhanden ist,
- das (zweite) Formschlusselement (17) der Basiseinheit (4) an einem bezüglich der Schwerkraftrichtung (S) unten angeordneten Ausnehmungsboden (20) innenseitig angeordnet ist,
- bei der Montage des Behältnisses (2) an der Basiseinheit (4) die (zweiten) Formschlusselemente (17) zur Erzeugung des (zweiten) Formschlusses (18) durch die auf das Behältnis (2) wirkende Schwerkraft (G) miteinander in Eingriff bringbar sind.

6. Gerät (1) nach einem der vorhergehenden Ansprüche,
**dadurch gekennzeichnet, dass**
- der (erste oder/ und zweite) Formschluss (10, 18) erst ausgebildet ist, wenn sich das Behältnis (2) in seinem montierten Zustand (6) befindet,
- kein (erster oder/ und zweiter) Formschluss (10, 18) mittels der (ersten oder/ und zweiten) Formschlusselemente (9, 17) ausgebildet ist, wenn sich das Behältnis (2) nicht in seinem montierten Zustand (6) befindet.

7. Gerät (1) nach einem der vorhergehenden Ansprüche,
**dadurch gekennzeichnet, dass**
- das Behältnis (2) einen ersten Anschluss (21) umfasst,
- die Basiseinheit (4) an einer quer zur Andockrichtung (A) verlaufenden Stirnwand (22) der Ausnehmung (5) einen zweiten Anschluss (23) umfasst, der komplementär zum ersten Anschluss (21) ausgebildet ist,
- im montierten Zustand (6) des Behältnisses (2) die fluidische Verbindung (24) des Behältnisses (2) und der Basiseinheit (4) mittels des ersten und des zweiten Anschlusses (21, 23) entlang der Andockrichtung (A) ausgebildet ist.

8. Gerät (1) nach Anspruch 7,
**dadurch gekennzeichnet, dass**
der erste Anschluss (21) einen entlang der Andockrichtung (A) abstehenden Anschlussstutzen (25) und der zweite Anschluss (23) eine entlang der Andockrichtung (A) ausgenommene Stutzenaufnahme (26) umfasst oder umgekehrt.

9. Gerät (1) nach einem der vorhergehenden Ansprüche,
**dadurch gekennzeichnet, dass**
das Behältnis (2) eine Abdeckung (27) umfasst, die im montierten Zustand (6) des Behältnisses (2) die Ausnehmung (5) der Basiseinheit (4) gegenüber einer äußeren Umgebung (28) des Geräts (1) verschließt.

10. Gerät (1) nach Anspruch 9,
**dadurch gekennzeichnet, dass**
- die Abdeckung (27) und die Basiseinheit (4) je wenigstens ein Zentrierelement (29) aufweisen, wobei die Zentrierelemente (29) komplementär zueinander ausgebildet sind,
- die Zentrierelemente (29) bei der Montage des Behältnisses (2) an der Basiseinheit (4) miteinander in Eingriff gebracht werden, sodass die Zentrierelemente (29) das Behältnis (2) quer zur Andockrichtung (A) an der Basiseinheit (4) halten.
